Europäisches Patentamt

European Patent Office

Office européen des brevets

(11) Numéro de publication: **0 370 905**
**A1**

## DEMANDE DE BREVET EUROPEEN

(21) Numéro de dépôt: 89403227.5

(22) Date de dépôt: 22.11.89

(51) Int. Cl.5: **A01N 53/00**, //(A01N53/00, 55:00,47:38,43:84,43:653,43:50)

(30) Priorité: 23.11.88 FR 8815244

(43) Date de publication de la demande:
30.05.90 Bulletin 90/22

(84) Etats contractants désignés:
**AT BE CH DE ES GB GR IT LI LU NL SE**

(71) Demandeur: **ROUSSEL-UCLAF**
**35, boulevard des Invalides**
**F-75007 Paris(FR)**

(72) Inventeur: **Benoit, Marc**
**Le Cannet Est, Pont de l'Etoile**
**F-13360 Roquevaire(FR)**

(74) Mandataire: **Tonnellier, Marie-José et al**
**111, route de Noisy B.P. no 9**
**F-93230 ROMAINVILLE(FR)**

(54) Nouvelles compositions pesticides renfermant un pyréthrinoide et un fongicide.

(57) Les compositions pesticides renfermant comme principe actif d'une part au moins un pyréthrinoïde, et d'autre part au moins un fongicide choisi dans le groupe des azoles et des imidazoles.

Comme fongicide préféré, on peut citer le prochloraze, l'imazalil, le flusilazol, le diclobutrazole, le triadiménol, le propiconazole ou le fenpropimorph.

EP 0 370 905 A1

## Nouvelles compositions pesticides renfermant un pyréthrinoïde et un fongicide

La présente invention concerne de nouvelles compositions pesticides renfermant un pyréthrinoïde et un fongicide.

L'invention a pour objet les compositions pesticides renfermant comme principe actif d'une part au moins un pyréthrinoïde, et d'autre part au moins un fongicide choisi dans le groupe des azoles et des morpholines, et plus particulièrement dans le groupe des imidazoles et des triazoles.

Comme composé pyréthrinoïde préféré, on peut citer : la deltaméthrine, la tralométhrine, la nococythrine, la fenpropathrine, le fenvalérate, la cyhalothrine, le fluvalinate, la perméthrine, la phénothrine, le flucythrinate, la cyfluthrine, la bifenthrine, la téfluthrine, la fenfluthrine, ou encore la bioresméthrine, la bioalléthrine, la pralléthrine, la tétraméthrine, la kadéthrine, l'empenthrine, la térralléthrine et la fluméthrine. On peut citer également les pyréthrinoïdes décrits et revendiqués dans les brevets européens 0038271, 0041021, 0048186, 0050534, 0110769, 0114012, 281439 et le brevet français 2536389.

L'invention a plus particulièrement pour objet les compositions dans lesquelles le fongicide est le prochloraze ou l'imazalil.

Parmi les compositions préférées de l'invention on peut également citer celles où le fongicide est le flusilazol ou encore celles où le fongicide est le diclobutrazole, le triadiménol, le propiconazole ou le fenpropimorph.

- Le prochloraze ou N-propyl-N-[2-(2,4,6-trichlorophénoxy) éthyl] imidazol-1-carboxamide est un produit bien connu pour ses propriétés fongicides [cf à ce sujet : The Pesticide Manual 7è édition publié par "The British Crop Protection Council p 452].

- L'imazalil ou allyl 1-(2,4-dichlorophényl)-2-imidazol-1-yl éthyl éther est un fongicide connu pour ses propriétés systémiques [Voir, The Pesticide Manual 7è édition publié par The British Crop Protection Council p 315].

- Le flusilazol ou 1-[[bis(4fluorophényl) méthyl silyl] méthyl]-1H-1,2,4 triazole est également un produit fongicide connu voir The Agrochemicals Hand book 2è édition.

- Le diclobutrazole ou (2RS,3RS)-1-(2,4-dichlorophényl)-4,4-diméthyl-2-(1H-1,2,4-triazol-1-yl) pentane-3-ol est un fongicide bien connu pour ses applications diverses (Voir The Pesticide Manual 7è édition publié par The British Crop Protection Council p 186).

- Le triadiménol ou 1-(4-chlorophénoxy)-3,3-diméthyl-1-(1H-1,2,4-triazol-1-yl) butan 2-ol est également bien connu pour ses propriétés fongicides (Voir The Agrochemicals hand book 2è édition).

- Le propiconazole ou (±)-1-[2-(2,4-dichlorophényl)-4-propyl-1,3-dioxolan-2-yl-méthyl]-1H-1,2,4-triazol (Voir à ce sujet The Pesticide Manual 7è édition publié par The British Crop Protection Council p 468).

- Le fenpropimorph ou (±)-cis-4-[3-(4-tert-butylphényl)-2-méthylpropyl] 2,6-diméthylmorpholine est décrit dans "The Pesticide Manual" 7è édition publié par The British Crop Protection Council p 265.

Parmi les compositions préférées de l'invention, on peut citer les compositions caractérisées en ce que le pyréthrinoïde est choisi dans le groupe constitué par la deltaméthrine, la tralométhrine, la nococythrine, la fenpropathrine, le fenvalérate, la cyhalothrine, le fluvalinate, la perméthrine, la phénothrine, le flucythrinate, la cyfluthrine, la bifenthrine, la téfluthrine et la fenfluthrine et tout particulièrement les compositions renfermant la deltaméthrine et celles renfermant la téfluthrine.

Parmi les compositions préférées de l'invention, on peut citer également les compositions renfermant le (1R,cis) 2,2-diméthyl-3-[(Z)-3-oxo 3-(1,1,1,3,3,3-hexafluoro isopropoxy) 1-propényl] cyclopropane carboxylate de (S) cyano 3-phénoxy benzyle (dénommé ci-après produit A), l'un de ses stéréoisomères et les divers mélanges de stéréoisomères possibles (cf le brevet européen 0048186) ou encore le 1R,cis (E) 2,2-diméthyl 3-[3-oxo 3-méthoxy 2-fluoro 1-propényl] cyclopropane carboxylate de pentafluorophényl méthyle l'un de ses stéréoisomères, et les divers mélanges de stéréoisomères possibles (cf le brevet européen 0050534 et le brevet français 2536389).

On vient de découvrir que la présence d'azoles et de morpholines et plus particulièrement d'imidazoles et de triazoles comme par exemple le PROCHLORAZE, l'IMAZALIL, le FLUSILAZOL, le DICLOBUTRAZOLE, le TRIADIMENOL, le PROPICONAZOLE ou le FENPROPIMORPH augmentait de façon très marquée l'activité insecticide et acaricide des pyréthrinoïdes. Les résultats de tests biologiques exposés ci-après dans la partie expérimentale mettent clairement en évidence le caractère de synergie des compositions renfermant un pyréthrinoïde d'une part, par exemple la téfluthrine, la deltaméthrine ou le produit A et le prochloraze, l'imazalil, le flusilazol, le diclobutrazole, le triadiménol, le propiconazole ou le fenpropimorph. On a obtenu des résultats particulièrement intéressants sur DIABROTICA et autres parasites du sol, on a obtenu également de bons résultats sur les lépidoptères notamment sur SPODOPTERA LITTORALIS, sur les acariens parasites des végétaux comme les TETRANYQUES ou aussi sur les acariens parasites des animaux, par exemple les tiques et notamment les tiques du genre BOOPHILUS, ceux du genre HYALOMNIA, ceux du genre AMBLYOMNIA et ceux du genre RHIPICEPHALUS et toutes sortes de gales notamment la gale sarcoptique, la gale psoroptique et la gale chorioptique.

La présence d'azotes et de morpholines permet également de diminuer considérablement la résistance des insectes aux pyréthrinoïdes, et notamment la résistance de SPODOPTERA LITTORALIS aux pyréthrinoïdes.

L'invention a donc plus particulièrement pour objet les compositions pesticides caractérisées en ce qu'elles sont destinées à la lutte contre les insectes du sol, ou encore les compositions caractérisées en ce qu'elles sont destinées à la lutte contre les insectes des parties aériennes des végétaux comme par exemple les lépidoptères ou encore les compositions caractérisées en ce qu'elles sont destinées à la lutte contre les acariens parasites des végétaux ou des animaux.

L'invention a plus particulièrement pour objet les compositions renfermant de 10 à 1000 parties en poids de fongicide pour 1 partie en poids de pyréthrinoïde, et tout spécialement les compositions caractérisées en ce qu'elles renferment de 10 à 1000 parties en poids de prochloraze, d'imazalil, de flusilazol, de diclobutrazole, de triadiménol, de propiconazole ou de fenpropimorph pour une partie en poids de pyréthrinoïde.

Parmi les compositions préférées on peut citer tout particulièrement les compositions renfermant de 30 à 600 parties en poids de prochloraze, d'imazalil, de flusilazol, de diclobutrazole, de triadiménol, de propiconazole ou de fenpropimorph pour une partie du poids de pyréthrinoïde, comme par exemple les compositions renfermant de 40 à 60 parties en poids de prochloraze, d'imazalil, de flusilazol, de diclobutrazole, de triadiménol, de propiconazole ou de fenpropimorph pour une partie en poids de deltaméthrine ou de téfluthrine ou encore celles renfermant de 400 à 600 parties en poids de prochloraze et de flusilazol pour 1 partie en poids de deltaméthrine ou de téfluthrine.

Les compositions de l'invention sont préparées selon les procédés usuels de l'industrie agrochimique ou de l'industrie vétérinaire.

Dans ces compositions destinées à l'usage agricole et à l'usage dans les locaux, la ou les matières actives peuvent être additionnées éventuellement d'un ou plusieurs autres agents pesticides. Ces compositions peuvent se présenter sous forme de poudres, granulés, suspensions, émulsions, solutions, solutions pour aérosols, appâts ou autres préparations employés classiquement.

Outre le principe actif, ces compositions contiennent, en général, un véhicule et/ou un agent tensio-actif non ionique, assurant en outre, une dispersion uniforme des substances constitutives du mélange. Le véhicule utilisé peut être un liquide tel que l'eau, l'alcool, les hydrocarbures ou autres solvants organiques, une huile minérale, animale ou végétale, une poudre telle que le talc, les argiles, les silicates, le kieselguhr ou un solide combustible.

Pour exalter l'activité biologique des compositions de l'invention on peut les additionner à des synergistes classiques utilisés en pareil cas tel que le 1-(2,5,8-trioxadodécyl) 2-propyl 4,5-méthylènedioxy benzène (ou butoxyde de pipéronyle) ou la N-(2-éthyl heptyl) bicyclo [2,2-1] 5-heptène-2,3-dicarboximide, ou le pipéronyl-bis-2-(2'-n-butoxy éthoxy) éthylacétal (ou tropital).

**Exemple de compositions :**

a) On a préparé un concentré émulsifiable renfermant :

| Téfluthrine | 2 g |
|---|---|
| Prochloraze | 500 g |
| Tween 80 | 95 g |
| Topanol A | 95 g |
| Xylène | 95 g |

b) On a préparé un concentré émulsifiable renfermant :

EP 0 370 905 A1

| Deltaméthrine | 1 g |
|---|---|
| Prochloraze | 50 g |
| Butoxyde de pipéronyle | 50 g |

c) On a préparé une solution acétonique renfermant 100 mg de téfluthrine et 50 g de prochloraze par litre d'acétone (solution A).

d) On a préparé une solution acétonique renfermant 100 mg de téfluthrine pour 5 g de prochloraze (solution B).

e) On a préparé une solution acétonique renfermant 100 mg de téfluthrine pour 5 g de flusilazol (solution C).

f) On a préparé une solution acétonique renfermant une partie de (1R,cis) 2,2-diméthyl-3-[(Z)-3-oxo 3-(1,1,1,3,3,3-hexafluoro isopropoxy) 1- propényl] cyclopropane carboxylate de (S) cyano 3-phénoxy benzyle pour 500 de prochloraze.

g) On a préparé un spray renfermant une partie de 1R,cis(E) 2,2-diméthyl 3-(3-oxo 3-méthoxy 2-fluoro 1-propényl)cyclopropane carboxylate de pentafluoro phényl méthyle pour 50 de flusilazol.

h) On a préparé une solution acétonique renfermant 100 mg de téfluthrine et 50 g de diclobutrazole par litre d'acétone.

i) On a préparé une solution acétonique renfermant 100 mg de téfluthrine et 50 g de triadiménol par litre d'acétone.

j) On a préparé une solution acétonique renfermant 100 mg de téfluthrine et 50 mg d'imazalil par litre d'acétone.

k) On a préparé une solution acétonique renfermant 100 mg de téfluthrine et 50 mg de propiconazole par litre d'acétone.

l) On a préparé une solution acétonique renfermant 100 mg de téfluthrine et 50 mg de fenpropymorph par litre d'acétone.

## Résultats biologiques

1) Etude de la synergie des activités sur Diabrotica de compositions renfermant 1 partie de téfluthrine pour 500 parties de prochloraze.

Les insectes tests sont des larves de dernier stade de Diabrotica traitées par application topique d'1 $\mu$l de solution acétonique à l'aide du micromanipulateur d'Arnold. On utilise 10 larves par dose et on effectue le contrôle de mortalité 24 h après le traitement.

Le mélange de 500 parties de prochloraze à 1 partie de téfluthrine augmente l'activité insecticide de la téfluthrine sur Diabrotica d'environ 4 fois.

2) Etude de la synergie des activités sur Diabrotica de compositions renfermant 1 partie de téfluthrine pour 50 parties de prochloraze ou de flusilazol ou d'imazalil ou de propiconazole.

La méthodologie est la même que celle décrite précédemment.

a) Le mélange de 50 parties de prochloraze et d'une partie de téfluthrine augmente l'activité insecticide de la téfluthrine sur Diabrotica d'environ 2 fois.

b) Le mélange de 50 parties de flusilazol et d'une partie de téfluthrine augmente l'activité insecticide de la téfluthrine sur Diabrotica d'environ 5,3 fois.

c) Le mélange de 50 parties d'imazalil et d'une partie de téfluthrine augmente l'activité insecticide de la téfluthrine sur Diabrotica d'environ 4 fois.

d) Le mélange de 50 parties de propiconazole et d'une partie de téfluthrine augmente l'activité insecticide de la téfluthrine sur Diabrotica de 4 fois environ.

3) Etude de la synergie des activités sur mouche domestique de compositions renfermant 1 partie de deltaméthrine pour 500 parties de prochloraze.

4

Les insectes tests sont des mouches femelles âgées de 4 à 5 jours et traitées par application topique d'1 µl de solution acétonique à l'aide du micromanipulateur d'Arnold. On utilise 30 insectes par dose. Le contrôle de mortalité est effectué 24 h après traitement.

Le mélange de 500 parties de prochloraze à 1 partie de deltaméthrine augmente l'activité insecticide de la deltaméthrine sur mouche domestique de façon non négligeable.

4) Etude de la synergie des activités sur Lépidoptères (Spodoptera littoralis) de compositions renfermant 1 partie de deltaméthrine pour 500 parties de prochloraze ou de flusilazol.

Les insectes tests sont des larves de 3ème stade de Spodoptera littoralis traitées par application topique d'1 µl de solution acétonique à l'aide du micromanipulateur d'Arnold. On utilise 20 larves par dose. La mortalité est contrôlée 48 h après le traitement.

a) Le mélange de 500 parties de prochloraze à 1 partie de deltaméthrine augmente l'activité insecticide de la deltaméthrine sur Spodoptera littoralis d'environ 2,4 fois.

b) Le mélange de 500 parties de flusilazol à 1 partie de deltaméthrine augmente l'activité insecticide de la deltaméthrine sur Spodoptera littoralis d'environ 2,6 fois.

5) Etude de la synergie des activités sur lépidoptères (Spodoptera littoralis) de compositions renfermant 1 partie de deltaméthrine pour 50 parties de prochloraze ou de flusilazol. La méthodologie est la même que celle décrite précédemment.

a) Le mélange de 50 parties de prochloraze à 1 partie de deltaméthrine augmente l'activité insecticide de la deltaméthrine sur Spodoptera littoralis d'environ 1,3 fois.

b) Le mélange de 50 parties de flusilasol à 1 partie de deltaméthrine augmente l'activité insecticide de la deltaméthrine sur Spodoptera littoralis d'environ 1,8 fois.

6) Etude de la synergie des activités sur acariens de compositions renfermant 1 partie de (1R,cis) 2,2-diméthyl-3-[(Z)-3-oxo 3-(1,1,1,3,3,3-hexafluoro isopropoxy) 1-propényl] cyclopropane carboxylate de (S)-cyano 3-phénoxy benzyle (composé A) pour 500 parties de prochloraze.

Les acariens tests sont des femelles âgées d'une semaine déposées sur des feuilles de haricot préalablement traitées avec 2 ml de solution moitié eau moitié acétone au moyen d'un pistolet FISHER. 30 acariens sont utilisés par dose. Le contrôle d'efficacité a lieu 3 jours après l'infestation.

Le mélange de 500 parties de prochloraze avec 1 partie de produit A augmente l'activité acaricide du produit A sur Tetranychus urticae d'environ 4,7 fois.

7) Etude de la synergie des activités sur acariens de compositions renfermant 1 partie de produit A pour 50 parties de prochloraze.

La méthodologie est la même que celle décrite précédemment.

Le mélange de 50 parties de prochloraze avec 1 partie de produit A augmente l'activité acaricide du produit A sur Tetranychus urticae d'environ 1,9 fois.

8) Etude de la synergie des activités sur Diabrotica de compositions renfermant 1 partie de téfluthrine pour 50 parties de dichlobutrazole ou de triadiménol ou de fenpropimorph.

Le mélange de 50 parties de diclobutrazote, de triadiménol ou de fenpropimorph augmente notablement l'activité de la téfluthrine.

9) En ajoutant du butoxyde de pipéronyle aux compositions précédentes, on augmente l'activité insecticide de façon non négligeable.

**Revendications**

5

1) Les compositions pesticides renfermant comme principe actif d'une part au moins un pyréthrinoïde, et d'autre part au moins un fongicide choisi dans le groupe des azoles et des morpholines.

2) Les compositions pesticides telles que définies à la revendication 1 dans lesquelles le fongicide est choisi dans le groupe constitué par les imidazoles et les triazoles.

3) Les compositions pesticides telles que définies à la revendication 2 dans lesquelles le fongicide est le prochloraze ou l'imazalil.

4) Les compositions pesticides telles que définies à la revendication 2 dans lesquelles le fongicide est le flusilazol.

5) Les compositions pesticides telles que définies à la revendication 1 ou 2 dans lesquelles le fongicide est le diclobutrazote, le triadiménol, le propiconazole ou le fenpropimorph.

6) Les compositions pesticides telles que définies à l'une quelconque des revendications 1 à 5 caractérisées en ce que le pyréthrinoïde est choisi dans le groupe constitué par la deltaméthrine, la tralométhrine, la nococythrine, la fenpropathrine, le fenvalérate, la cyhalothrine, le fluvalinate, la perméthrine, la phénothrine, le flucythrinate, la cyfluthrine, la bifenthrine, la téfluthrine et la fenfluthrine.

7) Les compositions pesticides telles que définies à la revendication 6 dans lesquelles le pyréthrinoïde est la deltaméthrine.

8) Les compositions pesticides telles que définies à la revendication 6 dans lesquelles le pyréthrinoïde est la téfluthrine.

9) Les compositions pesticides telles que définies à l'une quelconque des revendications 1 à 5 dans lesquelles le pyréthrinoïde est le (1R,cis) 2,2-diméthyl-3-[(Z)-3-oxo 3-(1,1,1,3,3,3-hexafluoro isopropoxy) 1-propényl] cyctopropane carboxylate de (S) cyano 3-phénoxy benzyle, l'un de ses stéréoisomères et les divers mélanges de stéréoisomères possibles.

10) Les compositions pesticides telles que définies à l'une quelconque des revendications 1 à 5 dans lesquelles le pyréthrinoïde est le 1R,cis (E) 2,2-diméthyl 3-(3-oxo 3-méthoxy 2-fluoro 1-propényl) cyclopropane carboxylate de pentafluorophényl méthyl, l'un de ses stéréoisomères et les divers mélanges de stéréoisomères possibles.

11) Les compositions pesticides telles que définies à l'une quelconque des revendications 1 à 10 renfermant de 10 à 1000 parties en poids de fongicide pour 1 partie en poids de pyréthrinoïde.

12) Les compositions pesticides telles que définies à la revendication 11 caractérisées en ce qu'elles renferment de 10 à 1000 parties en poids de prochloraze, d'imazalil, de flusilazol, de diclobutrazole, de triadiménol, de propiconazole ou de fenpropimorph pour une partie en poids de pyréthrinoïde.

13) Les compositions pesticides telles que définies à la revendication 12 caractérisées en ce qu'elles renferment de 30 à 600 parties en poids de prochloraze, d'imazalil, de flusilazol, de diclobutrazole, de triadiménol, de propiconazole ou de fenpropimorph pour une partie en poids de pyréthrinoïde.

14) Les compositions pesticides telles que définies à la revendication 13 caractérisées en ce qu'elles renferment de 40 à 60 parties en poids de prochloraze, d'imazalil, de flusilazol, de diclobutrazole, de triadiménol, de propiconazole ou de fenpropimorph pour une partie en poids de deltaméthrine ou de téfluthrine.

15) Les compositions pesticides telles que définies à la revendication 13 caractérisées en ce qu'elles renferment de 400 à 600 parties en poids de prochloraze ou de flusilazol pour une partie en poids de deltaméthrine ou de téfluthrine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 007 589 (BASF AG) <br> * Page 1, lignes 4-19; page 11, lignes 8-25; page 20, lignes 30-31; revendications * <br> --- | 1-15 | A 01 N 53/00 // <br> (A 01 N 53/00 <br> A 01 N 55:00 <br> A 01 N 47:38 <br> A 01 N 43:84 <br> A 01 N 43:653 <br> A 01 N 43:50 ) |
| X | EP-A-0 001 809 (BASF AG) <br> * Page 1, lignes 3-6; page 3, lignes 1-9; revendications 1-3,6,7 * <br> --- | 1-15 | |
| X | FR-A-2 299 808 (AIRWICK AG) <br> * Revendications 1-5,7 * <br> --- | 1-15 | |
| X | DE-A-2 738 907 (ICI LTD) <br> * Page 11, lignes 26-30; revendications 1-7 * <br> --- | 1-15 | |
| X | DE-A-3 641 553 (DEUTSCHE SOLVAY-WERKE GmbH) <br> * Revendications 1,10,11 * <br> --- | 1-15 | |
| A | EP-A-0 235 584 (ARTILIN) <br> * Revendications * <br> ----- | 1-15 | **DOMAINES TECHNIQUES RECHERCHES (Int. Cl.5)** <br><br> A 01 N |

Le présent rapport a été établi pour toutes les revendications

| Lieu de la recherche | Date d'achèvement de la recherche | Examinateur |
|---|---|---|
| LA HAYE | 19-02-1990 | RAVANEL C.M. |